# EUROPEAN PATENT SPECIFICATION

(11) **EP 3 336 203 B1**
(45) Date of publication and mention of the grant of the patent: **24.07.2019**
(21) Application number: 16203598.4
(22) Date of filing: 13.12.2016
(51) Int. Cl.: C21C 5/38, C21C 5/40, F27B 3/10, F28F 13/00, F27D 17/00, F28D 21/00

(54) **HEAT SURGE ARRESTORS**
WÄRMESTOSSABLEITER
PARASURTENSEUR THERMIQUE

(43) Date of publication of application: 20.06.2018
(73) Proprietor: General Electric Technology GmbH, 5400 Baden (CH)
(72) Inventor: RAFIDI, Nabil Elias, 35241 Växjö (SE)
(74) Representative: Rüger Abel

(56) References cited:
- WO-A1-2005/035797

## Description

### Field of the Disclosure

In general, this disclosure relates to apparatus and methods for use in a metal production industry to capture or absorb heat energy particularly from heat surges or peaks produced by metal production batch process operations. More specifically, this disclosure relates to apparatus and methods for use in a metal industry, such as the iron industry or the steel industry, to capture or absorb heat energy particularly from furnace heat surges or peaks of relatively high temperature increases from about 86 °F (30 °C) to about 2000 °F (1093 °C) or greater in a relatively short period of time and for a relatively short duration totaling about a minute or less, or about 30 seconds.

### Background of the Disclosure

Today, steel is largely made by smelting and refining iron and steel scrap in a metallurgical furnace, such as an electric arc furnace EAF or a basic oxygen furnace BOF. Historically, the EAF was generally designed and manufactured as a welded steel structure protected against high temperatures by a refractory lining. In the late '70s and '80s, the steel industry began to combat operational equipment stresses by replacing expensive refractory brick with water cooled roof panels and water cooled sidewall panels located in portions of the furnace vessel above the smelting area. Such water cooled components have also been used to line downstream furnace ducts. An example of a cooling system with water cooled coil components is disclosed in U.S. Patent Number 4,207,060. Generally, the coil components are formed from adjacent pipe sections, which form a channel for a liquid coolant to flow through the coil components. This liquid coolant is forced through the pipe sections under pressure to maximize heat energy transfer.

Today's modern EAFs require pollution control to capture hot flue gas containing carbon dioxide, carbon monoxide, hydrogen fluoride, hydrogen chloride, other gases, dioxins, particulates, and sublimates as pollutants, generated during the process of making steel, or other metal product. Flue gas generated in the EAFs generally flows from the furnace via two routes. One route of flue gas flow is through a furnace hood. The furnace hood is a part of the production plant apparatus and draws flue gas produced during furnace charging and tapping. The furnace hood also draws flue gas that may occur during the smelting process. Typically, the furnace hood is fluidly connected by a duct to a particulate collection system, such as a fabric filter bag house. As such, the fabric filter bag house comprises filter bags through which the flue gas passes. Passage of the flue gas through the filter bags traps and separates particulate matter from the flue gas by adhering to surfaces of the filter bags.

The second route of flue gas flow from the furnace is through a primary furnace duct. Often times, during the smelting cycle of the furnace, one or more dampers are used to close the duct to the furnace hood and to open the primary furnace duct. The primary furnace duct connects to the furnace and is the predominate route of flue gas flow from the furnace. The primary furnace duct may as an option be constructed to include cooled coil components to protect the duct from furnace heat damage. Through the primary furnace duct, flue gas flows from the furnace to the particulate collection system, to a duct, and to a flue gas treatment system, so that the flue gas may be cleaned/treated for release to the atmosphere.

While current cooled coil components are effective in cooling flue gas generated in EAFs, heat energy from flue gas heat surges is either lost or not easily absorbed or captured. Because heat energy from flue gas heat surges is either lost or not easily absorbed or captured, apparatus damage can occur, such as for example burning of particulate collection system filter bags. It is therefore understood that a need exists for heat energy absorption or capture from furnace flue gas heat surges for apparatus protection from heat related damage.

WO 2005/035797 A1 describes a method for collecting and treating reaction gases from a production plant for molten metal. Flue gas exiting the plant are guided into a dust-removing process. Before dust is removed from the flue gas it passes through a heat accumulator. The heat accumulator comprises several planar heat surge arrestors arranged in parallel to the flow direction of the flue gas such that the flue gas which has a temperature which is higher than the wall temperature of the heat surge arrestors, releases heat to the heat surge arrestors.

### Summary of the Disclosure

The subject disclosure provides apparatus and methods for use in a metal industry, such as the iron industry or the steel industry, to absorb or capture heat energy from furnace flue gas heat surges or peaks of relatively high temperature increases from about 86 °F (30 °C) to about 2000 °F (1093 °C) or greater in a relatively short period of time and for a relatively short duration totaling about a minute or less, or about 30 seconds. An apparatus according to the subject disclosure comprises a furnace for metal smelting, such as an electric arc furnace EAF or a basic oxygen furnace BOF, fluidly connected via one or more furnace ducts to a particulate collection system. Arranged within the one or more furnace ducts fluidly connecting the furnace to the particulate collection system is a plurality of heat surge arrestors. Flue gas generated in the furnace during batch metal production flows via a primary furnace duct and/or a furnace hood duct through the plurality of heat surge arrestors to the particulate collection system and to a downstream flue gas treatment system. The subject plurality of heat surge arrestors comprises at least two to about 50, or about 30, heat surge arrestors of a stretched material construction. As such, a stretched material construction suitable for use in the subject apparatus is defined as a stretched or expanded planar sheet of a substantially plastic deformable material with a plurality of apertures formed therethrough substantially perpendicular to the plane thereof. More specifically, the plurality of apertures is formed between strands of the substantially plastic deformable material. The strands of the plastic deformable material are worked so that at least a leading edge thereof extends outwardly above the plane of the overall planar sheet, such as at an angle of about 20 degrees to about 40 degrees, or about 30 degrees with respect thereto, and at least an opposed trailing edge thereof extends outwardly below the plane of the overall planar sheet, such as at an angle of about 20 degrees to about 40 degrees, or about 30 degrees with respect thereto, to produce a single heat surge arrestor of stretched material construction. The heat surge arrestor strands are so angled for increased flue gas contact and hence increased heat energy transfer from the flue gas while minimizing pressure drop within the duct(s). The planar side of the heat surge arrestor extends through the extended plane of the heat surge arrestor. This extended plane of the heat surge arrestor corresponds to a plane of a flat plate, if such a flat plate were arranged in the same place and position within a duct as the heat surge arrestor. According to yet another aspect, the subject heat surge arrestors may each have the same or a differing solidity of about 0.2 percent to about 0.7 percent with perpendicular light. Solidity is defined herein as the percentage of area cast into shadow when exposed to light at a specified angle. According to yet another aspect, the plurality of heat surge arrestors consists of at least a first heat surge arrestor and a second heat surge arrestor, the second heat surge arrestor positioned closer to the particulate collection system than is the first heat surge arrestor. By using two or more heat surge arrestors of stretched material construction, flue gas heat surge heat energy absorption or capture is increased as compared using a single heat surge arrestor of stretched material construction. By using the subject heat surge arrestors of stretched material construction instead of a prior art solid metal heat surge arrestor as disclosed in WO 2005/035797, a lower weight heat surge arrestor is achieved, which is more cost efficient in terms of both construction costs and erection costs. According to another aspect, the subject heat surge arrestors are preferably made of metal, for example steel. By using metal as the construction material for the subject heat surge arrestors, a robust apparatus is achieved having a relatively long useful lifetime.

The subject heat surge arrestors are preferably arranged in parallel one to another at an angle Ω at least partially across at least a portion of the one or more furnace ducts. As such, each heat surge arrestor is arranged at the same angle Ω within the one or more furnace ducts so as to have a bottom edge in contact with and attached to a bottom wall of the furnace duct and a top edge in contact with and attached to a top wall of the furnace duct, wherein the top edge is downstream with regard to flue gas flow of the bottom edge. As an option, one or more heat surge arrestors may be sized for arrangement only partially across a furnace duct, such as for example, wherein the top edge does not contact the top wall of the furnace duct, the bottom edge does not contact the bottom wall of the furnace duct, or one or more side edges do not contact one or more side walls of the furnace duct. Such may be an option to reduce weight within the furnace duct and/or reduce costs associated with the subject heat surge arrestors. As another option, the thickness of the subject heat surge arrestors may be varied, with preferably, relatively thicker heat surge arrestors arranged in the furnace duct in a relatively closer proximity to the furnace, and relatively thinner heat surge arrestors arranged in the furnace duct in a relatively more distanced proximity from the furnace. Such may be an option to increase heat energy absorption by the heat surge arrestors as the heat transfer coefficient of the heat surge arrestor increases with increasing thickness. As still another option, the subject heat surge arrestors may vary in solidity, with preferably, heat surge arrestors of relatively greater solidity arranged in the furnace duct in a relatively closer proximity to the furnace, and heat surge arrestors of relatively lesser solidity arranged in the furnace duct in a relatively more distanced proximity from the furnace. In such a case of the subject heat surge arrestors varying in solidity, the subject heat surge arrestors would not be arranged each parallel to one another at the same angle Ω within the furnace duct, but would rather be arranged within the furnace duct at the angle Ω dictated by the particular solidity of the heat surge arrestor as discussed in more detail below. Such may be an option to increase heat energy absorption by the heat surge arrestors as the heat transfer coefficient of the heat surge arrestor increases with increasing solidity.

A method of using the subject apparatus in a metal industry, such as the iron industry or the steel industry, to absorb or capture heat energy from furnace flue gas heat surges or peaks of relatively high temperatures from about 86 °F (30 °C) to about 2000 °F (1093 °C) or greater in a relatively short period of time and for a relatively short duration totaling about a minute or less, or about 30 seconds, comprises arranging a plurality of heat surge arrestors within one or more furnace ducts downstream of a metal smelting furnace and upstream of a particulate collection system, with the plurality of heat surge arrestors comprising at least two heat surge arrestors of a stretched material construction of like or of differing solidity operable for capture or absorption of heat energy from furnace flue gas heat surges.

In summary, the subject metal production plant comprises a metal smelting furnace comprising a furnace hood duct and a primary furnace duct, i.e., furnace ducts, and a plurality of stretched metal heat surge arrestors arranged in one or more of the furnace ducts operable to absorb heat energy from a flue gas heat surge from the metal smelting furnace. The plurality of stretched metal heat surge arrestors comprises about 2 to about 50, or about 30 individual heat surge arrestors, which may have the same or differing solidity. Each heat surge arrestor of the plurality of stretched metal heat surge arrestors is arranged within a furnace duct at an angle Ω along the longitudinal axis of the furnace duct. Each heat surge arrestor of the plurality of stretched metal heat surge arrestors of relatively the same solidity with respect to other heat surge arrestors of the plurality of heat surge arrestors is arranged within a furnace duct in parallel with respect to the other heat surge arrestors of the plurality of heat surge arrestors at an angle Ω along the longitudinal axis of the furnace duct. The thickness of one or more heat surge arrestors of the plurality of heat surge arrestors may differ with respect to other heat surge arrestors of the plurality of heat surge arrestors, wherein relatively thicker heat surge arrestors are arranged in the one or more furnace ducts in a relatively closer proximity to the furnace, and relatively thinner heat surge arrestors are arranged in the one or more furnace ducts in a relatively more distanced proximity from the furnace. One or more heat surge arrestors of the plurality of heat surge arrestors may differ in solidity with respect to other heat surge arrestors of the plurality of heat surge arrestors, wherein heat surge arrestors of relatively greater solidity are arranged in the one or more furnace ducts in a relatively closer proximity to the furnace, and heat surge arrestors of relatively lesser solidity are arranged in the one or more furnace ducts in a relatively more distanced proximity from the furnace. Each heat surge arrestor of the plurality of heat surge arrestors may be arranged within a furnace duct at a like or a differing angle Ω along the longitudinal axis of the furnace duct as determined based on the particular solidity of the heat surge arrestor. Strands of one or more heat surge arrestors of the plurality of heat surge arrestors are angled about 20 degrees to about 40 degrees, or about 30 degrees, with respect to an extended plane of the one or more heat surge arrestors.

In summary, the method of absorbing heat surges in a metal production plant comprises arranging a plurality of stretch metal heat surge arrestors in one or more metal smelting furnace ducts for absorption by the plurality of stretch metal heat surge arrestors of heat energy from furnace flue gas heat surges. According to the subject method, the plurality of stretched metal heat surge arrestors comprises about 2 to about 50 individual heat surge arrestors having the same or differing solidity. Also according to the subject method, each heat surge arrestor of the plurality of stretched metal heat surge arrestors is arranged within a furnace duct at an angle Ω along the longitudinal axis of the furnace duct. In accordance with this method, one or more heat surge arrestors of the plurality of heat surge arrestors arranged in the one or more furnace ducts may be sized to extend only partially across an interior of the one or more furnace ducts. Further according to the method, the plurality of heat surge arrestors arranged in the one or more furnace ducts is supported by walls defining the one or more furnace ducts to which the plurality of heat surge arrestors is attached. Further in accordance with the subject method, each heat surge arrestor of the plurality of stretched metal heat surge arrestors of relatively the same solidity with respect to other heat surge arrestors of the plurality of heat surge arrestors is arranged within the one or more furnace ducts in parallel with respect to other heat surge arrestors of the plurality of heat surge arrestors at an angle Ω along the longitudinal axis of the furnace duct. The thickness of one or more heat surge arrestors of the plurality of heat surge arrestors may differ with respect to other heat surge arrestors of the plurality of heat surge arrestors, wherein relatively thicker heat surge arrestors are arranged in the one or more furnace ducts in a relatively closer proximity to the furnace, and relatively thinner heat surge arrestors are arranged in the one or more furnace ducts in a relatively more distanced proximity from the furnace. One or more heat surge arrestors of the plurality of heat surge arrestors may differ in solidity with respect to other heat surge arrestors of the plurality of heat surge arrestors, wherein heat surge arrestors of relatively greater solidity are arranged in the one or more furnace ducts in a relatively closer proximity to the furnace, and heat surge arrestors of relatively lesser solidity are arranged in the one or more furnace ducts in a relatively more distanced proximity from the furnace. Each heat surge arrestor of the plurality of heat surge arrestors may be arranged within the one or more furnace ducts at a like or a differing angle Ω along the longitudinal axis of the furnace duct as determined based on the particular solidity of the heat surge arrestor. Strands of one or more heat surge arrestors of the plurality of heat surge arrestors are angled about 20 degrees to about 40 degrees, or about 30 degrees, with respect to an extended plane of the one or more heat surge arrestors.

The above described apparatus and methods are exemplified in more detail by the following figures and detailed description.

### Brief Description of the Drawings

Referring now to the figures, which are exemplary embodiments of the present plant and apparatus, wherein the like elements are numbered alike:
Fig. 1 is a schematic side cross sectional view of a metal production plant in accordance with the subject disclosure;
Fig. 2 is a schematic perspective view of a planar sheet material used for manufacturing a heat surge arrestor;
Fig. 3 is a schematic perspective view of a heat surge arrestor produced from the planar sheet material of Fig. 2;
Fig 4 is a schematic perspective view of an element of the heat surge arrestor of Fig. 3;
Figs. 5A and 5B are schematic perspective views of elements of heat surge arrestors, such as that of Fig. 3, illustrating a theoretical determination of solidity;
Fig. 6 is a schematic side view of heat surge arrestors, such as that of Fig. 3, arranged within a duct; and
Fig. 7 is a schematic side view of heat surge arrestors, such as that of Fig. 3, arranged within a duct.

### Detailed Description

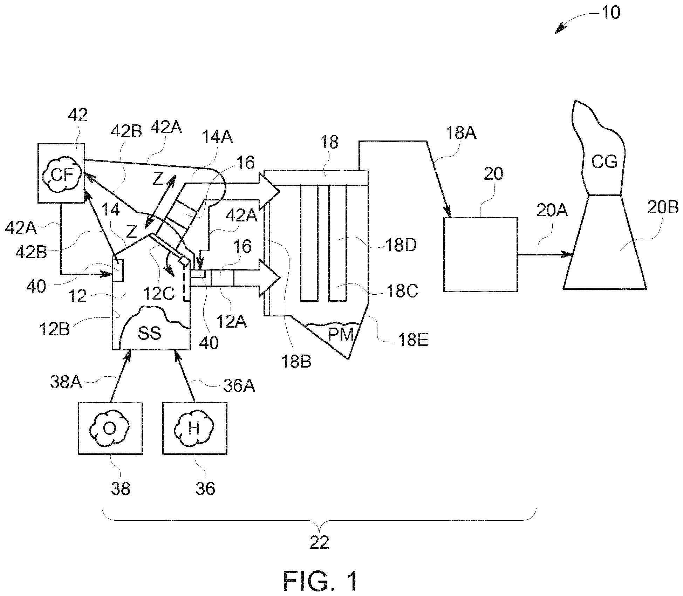

Fig. 1 illustrates a metal production plant 10 according to an embodiment of the subject disclosure. The metal production plant 10 comprises a furnace 12, a furnace hood 14, a furnace hood duct 14A, a primary furnace duct 12A, a plurality of heat surge arrestors 16 arranged in furnace hood duct 14A and primary furnace duct 12A, a particulate collection system 18 and a flue gas treatment system 20. The metal production plant 10, furnace 12, furnace hood 14, furnace hood duct 14A, primary furnace duct 12A, plurality of heat surge arrestors 16 arranged in furnace hood duct 14A and primary furnace duct 12A, particulate collection system 18 and flue gas treatment system 20 are referred to herein individually and collectively as apparatus 22. According to the subject disclosure, furnace 12, such as an electric arc furnace EAF or basic oxygen furnace BOF, operable for smelting a metal such as iron and/or steel, is fluidly connected via one or more furnace ducts 12A, 14A to a particulate collection system 18, and via a fluidly connected duct 18A, to a flue gas treatment system 20.

Flue gas FG generated in the furnace 12 during batch metal production generally flows out from the furnace 12 via two routes. One route of flue gas FG flow from furnace 12 is through the furnace hood 14 and furnace hood duct 14A. The furnace hood 14 and furnace hood duct 14A draw the flue gas FG produced during furnace 12 charging and tapping. The furnace hood 14 and furnace hood duct 14A also draw flue gas FG that may occur during the smelting process. The furnace hood 14 and furnace hood duct 14A are fluidly connected to a particulate collection system 18, such as a fabric filter bag house. As such, the particulate collection system 18 may comprise filter bags 18C through which the flue gas FG passes. In the passage of flue gas FG through the filter bags 18C, particulate matter PM entrained in the flue gas FG is separated from the flue gas FG by collection on surfaces 18D of the filter bags 18C. Particulate matter PM collected on surfaces 18D of the filter bags 18C may be periodically removed from surfaces 18D and collected in hopper 18E for environmentally conservative disposal, or for use within metal production plant 10 or elsewhere.

The second route of flue gas FG flow from furnace 12 is through a primary furnace duct 12A. During the smelting cycle of the furnace 12, one or more movable dampers 12C may be used to close the furnace hood duct 14A and to open the primary furnace duct 12A. The primary furnace duct 12A connects to the furnace 12 for a flow flue gas FG from the furnace 12 therethrough. Construction of primary furnace duct 12A may as an option include cooled coil components 40, such as is true for furnace 12. As such, cooled coil components 40 for circulation of a cooling fluid CF supplied via duct 42A from a cooling fluid supply 42 may be arranged within primary furnace duct 12A, just as in furnace 12. Heated cooling fluid CF is returned from the cooled coil components 40 to the cooling fluid supply 42 via duct 42B for cooling and recirculation. Through the primary furnace duct 12A, flue gas FG flows from the furnace 12 to the fluidly connected particulate collection system 18. From the particulate collection system 18, flue gas flows through duct 18A, and flue gas treatment system 20, so that the flue gas FG may be cleaned/treated to produce cleaned flue gas CG for release to the atmosphere via duct 20A and stack 20B.

Arranged within one or more of the furnace ducts 12A, 14A fluidly connecting the furnace 12 to the particulate collection system 18 is a plurality of heat surge arrestors 16. Flue gas FG generated in the furnace 12 during batch metal production flows via primary furnace duct 12A and/or furnace hood duct 14A through the plurality of heat surge arrestors 16 arranged therein, prior to entering into the fluidly connected particulate collection system 18. The subject plurality of heat surge arrestors 16 comprises at least two to about 50, or about 30 individual heat surge arrestors 16 of a stretched material construction 24A. Stretched material construction 24A as defined herein is a working of a planar sheet material 24 of a substantially plastic deformable material with a plurality of apertures 26 formed through thickness T substantially perpendicular to the plane P of planar sheet material 24, by stretching or expanding the planar sheet material 24 from about 60 percent to about 800 percent, or about 300 percent larger in size than the size of the planar sheet material 24 prior to such stretching or expansion.

More specifically, heat surge arrestors 16 may be produced from many different suitable metal materials. Examples of suitable metal materials are tempered sheet-metal, such as sheet iron or sheet steel, e.g., HARDOX™ sheet metal commercially available from SSAB Svenskt Stal Aktiebolag Corporation, Sweden, or stainless materials. Stainless materials are especially well suited for use in corrosive environments. By using sheet metal to construct heat surge arrestors 16, a robust expanded screen is achieved with a rather long useful lifetime.

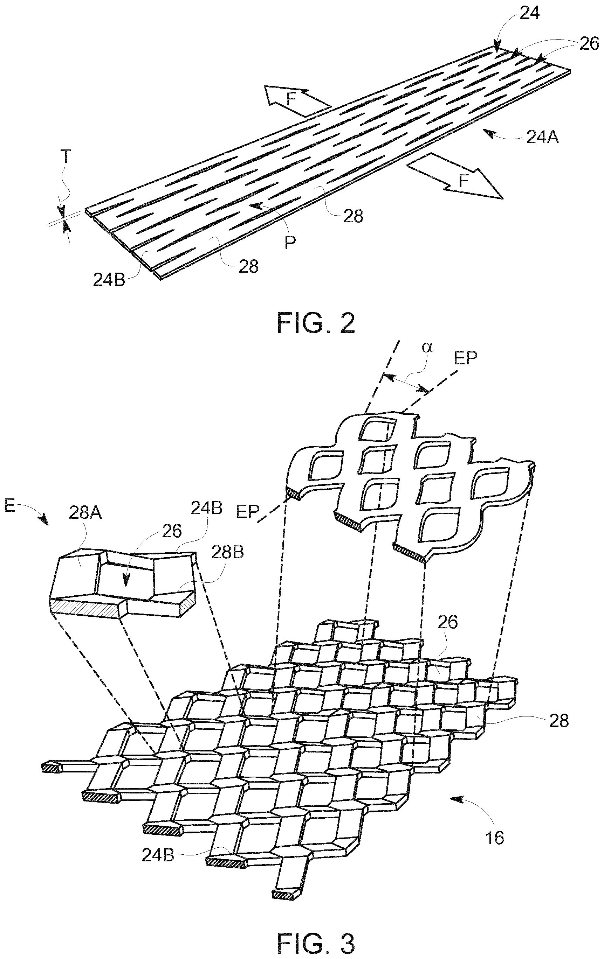

A heat surge arrestor 16 of a stretched material construction 24A, and a method of producing such a heat surge arrestor 16 from a planar sheet material 24, is illustrated in Figs. 2 and 3. To produce a heat surge arrestor 16 from a planar sheet material 24, a shearing knife is used to create a pattern of cuts or apertures 26 perpendicularly with respect to a plane P of sheet material 24, through the thickness T of the sheet material 24 used to produce the heat surge arrestor 16. While creating cuts or apertures 26 or after cuts or apertures 26 have been created, the sheet material 24 is stretched or expanded by applying force F in directions illustrated by arrows in Fig. 2, thus deforming both the cuts or apertures 26 made by the knife, and the planar sheet material 24. The result, illustrated in Fig. 3, is a pattern of angled strands 28 with apertures 26 between the angled strands 28. In other words, the angled strands 28 of the produced heat surge arrestor 16 are intermittently angled with respect to the plane P of sheet material 24. These angled strands 28 give the heat surge arrestor 16 desirable flue gas FG heat absorption properties. Desirable heat surge arrestor 16 flue gas FG heat absorption properties are defined herein as a heat transfer coefficient of about 60 W/m²K to about 100 W/m²K, or about 80 W/m²K. Heat surge arrestors 16 with a heat transfer coefficient of about 60 W/m²K to about 100 W/m²K, or about 80 W/m²K , upon use have the ability to absorb heat energy from heat surges to obtain a flue gas FG temperature at inlet 18B of particulate collection system 18 during a period of a heat surge comparable to a flue gas FG temperature at inlet 18B of particulate collection system 18 during a period of no heat surge and without use of a heat surge arrestors 16, e.g., about 130 °C to 160 °C.

The stretched material construction method described herein used to produce heat surge arrestors 16 causes planar sheet material 24 to deform to create several different measurable features and angles. A wide variety of differing heat surge arrestor 16 types may be produced by creating cuts or apertures 26 further apart or closer together, by using planar sheet material 24 of different thicknesses T or by creating cuts or apertures 26 of different lengths L. Depending on the degree to which sheet material 24 is stretched or expanded after creating the pattern of cuts or apertures 26, the heat surge arrestor 16 visibly varies, e.g., changes solidity, as described in more detail below. This method of producing heat surge arrestors 16 produces very little, if any, waste material, and a relatively small area of planar sheet material 24 can produce a relatively large area of heat surge arrestor 16.

By studying heat surge arrestor 16, a pattern of interconnected angled strands 28 defining apertures 26, i.e., an "element" E, emerges forming heat surge arrestor 16. An element E is defined as an aperture 26 in the heat surge arrestor 16 together with the angled strands 28 surrounding the aperture 26. Elements E are illustrated in Figs. 3, 4, 5A and 5B.

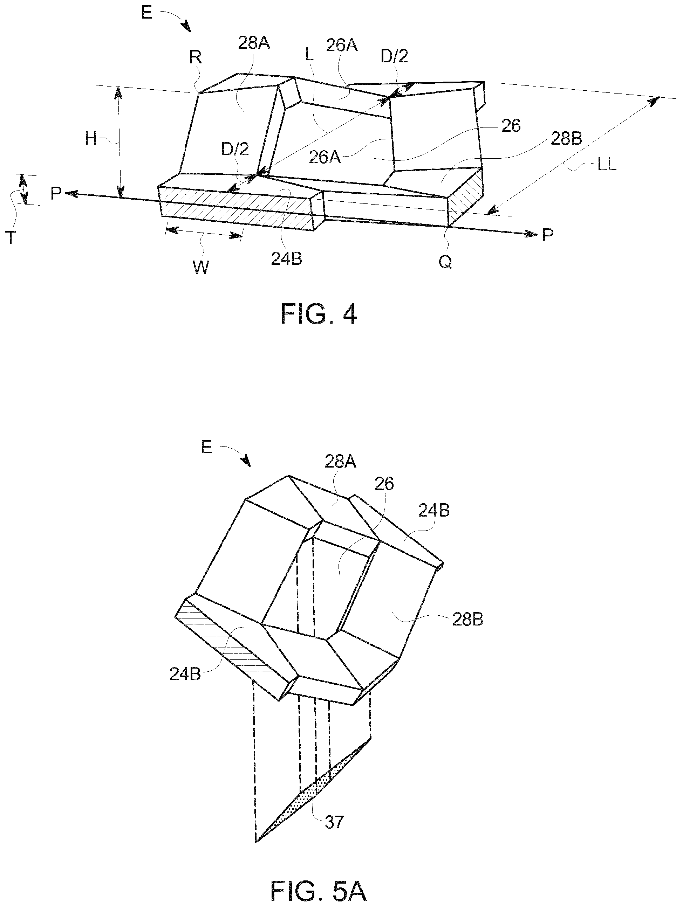

As illustrated in Fig. 4, each element E is made up of two angled strands 28A and 28B. One angled strand 28A is angled upwardly from plane P of sheet material 24 and the other angled strand 28B is angled downwardly from plane P of sheet material 24. Together, angled strands 28A and 28B turn element E into somewhat of a loop with aperture 26 surrounded by angled strands 28A and 28B at a fixed angle α. The strands 28A, 28B of the plastic deformable sheet material 24 are worked so that angled strand 28A extends outwardly above the plane P of sheet material 24, such as at an angle α of about 20 degrees to about 40 degrees, or about 30 degrees with respect thereto, and the other angled strand 28B extends outwardly below the plane P of sheet material 24, such as at an angle α of about 20 degrees to about 40 degrees, or about 30 degrees with respect thereto, to produce a single heat surge arrestor 16 of expanded screen construction 24A. As noted above, Fig. 3 illustrates angle α of angled strand 28 as compared to extended plane EP of the heat surge arrestor 16. Illustrated in Fig. 4, the angled strands 28 have thickness T and width W, where thickness T is approximately the original thickness T of planar sheet material 24. Heat surge arrestors 16 with larger widths W prove to have increased heat absorption properties over those with smaller widths W. Element E also has a length LL and a height H. Element E length LL is determined by measuring the length L of an aperture 26 plus the distance D between nearby lying apertures 26. Element height H, or heat surge arrestor 16 height H, is determined by measuring the distance from the lowest point Q of angled strand 28B to the highest point R of angled strand 28A. Height H may be modified by stretching the cut planar sheet material 24 to a lesser degree for a lesser height H or by stretching the cut planar sheet material 24 to a greater degree for a greater height H. Further, edges 26A of apertures 26 may be varied depending on the cutting edge of the tool used to create cuts or apertures 26. The cutting edge of the tool or knife used to create cuts or apertures 26 defines the shape of the angled strands 28.

To determine heat surge arrestors 16 most suitable for use in metal production plant 10, a measurable value defining the amount of contact surface area or "blockage" is required. This measurable value is referred to herein as solidity a. Solidity σ is expressed as a fraction of the full area of a planar side 24B of heat surge arrestor 16 that is occupied by angled strands 28. Solidity σ is theoretically defined as the percentage of area of the planar side 24B casting a shadow when exposed to a light source of a particular angle to the planar side 24B. The complex structure of the heat surge arrestor 16 makes solidity σ harder to measure as compared to measuring other types of screens. By changing the degree of angle α of angled strands 28 with respect to planar side 24B, solidity σ is significantly affected. Likewise, by changing the distance D, length LL, height H, width W and/or thickness T, solidity σ is significantly affected. Accordingly, each heat surge arrestor 16 may have a different solidity σ depending on angle α, distance D, length LL, height H, width W and/or thickness T. While solidity σ measures the area of contact by angled strands 28 of flue gas FG flow, it is sometimes more appropriate to measure the amount of open area or aperture 26 area of the heat surge arrestor 16. This measurable value is referred to herein as the porosity *β* of the heat surge arrestor 16. Porosity is calculated as β = 1 - σ, where β is porosity and σ is solidity.

Fig. 5A illustrates an element E of a heat surge arrestor 16 having a relatively high solidity σ. Area 37 illustrated below the element E depicts the area of light passing through aperture 26 when planar side 24B is exposed to a light source casting light perpendicular to planar side 24B. As illustrated in Fig. 5A, this area 37 of cast light is relatively small, indicating a relatively low porosity β and a relatively high solidity σ.

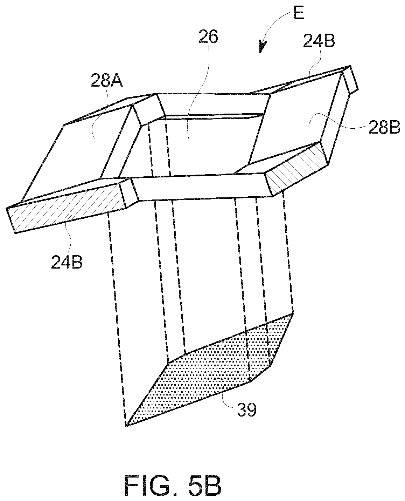

Fig. 5B illustrates an element E of a different heat surge arrestor 16. As illustrated, the element E of Fig. 5B has a relatively low solidity σ. Area 39 illustrated below element E of Fig. 5B depicts the area of light passing through aperture 26 when planar side 24B is exposed to a light source casting light perpendicular to planar side 24B. This area 39 of cast light is relatively large. Area 39 is larger than the area 37 of Fig. 5A, indicating a relatively high porosity β and a relatively low solidity σ. Accordingly, the solidity σ of the element E illustrated in Fig. 5A is higher than the solidity σ of element E illustrated in Fig. 5B.

By using the subject heat surge arrestors 16 of expanded screen construction 24A instead of a prior art solid metal barrier-type heat surge arrestor as disclosed in WO 2005/035797, a lower weight heat surge arrestor 16 is achieved resulting in a more cost-efficient apparatus 22, in terms of both construction costs and erection costs. The subject heat surge arrestors 16 are preferably arranged within furnace hood duct 14A, and/or also arranged within primary furnace duct 12A. Accordingly, heat surge arrestors are arranged in one or more furnace ducts 12A, 14A downstream with regard to flue gas FG flow of the furnace 12 such that the strands 28 are angled at angle α for increased flue gas FG contact and hence increased flue gas FG heat energy transfer thereto while minimizing pressure drop within the one or more furnace ducts 12A, 14A. The planar side 24B of the heat surge arrestor 16 extends through the extended plane EP of the heat surge arrestor 16. This extended plane EP corresponds to a plane of a flat plate, if such a flat plate were arranged in the same place and position within the ducts 12A, 14A as the heat surge arrestor 16. The subject heat surge arrestors 16 may each have the same or differing solidity σ of about 0.2 percent to about 0.7 percent, or about 0.3 percent with perpendicular light. As described above, solidity σ is defined herein as the percentage of area cast into shadow when exposed to light at a specified angle. According to yet another aspect, the plurality of heat surge arrestors 16 consists of at least a first heat surge arrestor 16 and a second heat surge arrestor 16, the second heat surge arrestor 16 positioned in a proximity relatively closer to the particulate collection system 18 than that of the first heat surge arrestor 16. By using two or more heat surge arrestors 16 of expanded screen construction 24A, flue gas FG heat surge heat energy absorption or capture is increased as compared using a single heat surge arrestor 16 of expanded screen construction 24A.

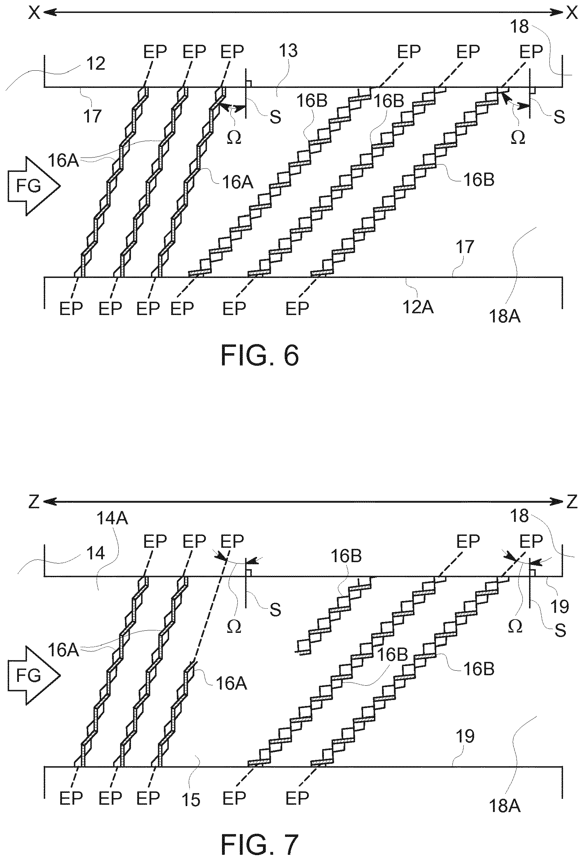

As illustrated in Figs. 6 and 7, the subject heat surge arrestors 16 are arranged in a spaced parallel arrangement with regard to adjacent heat surge arrestors 16 of like solidity σ within furnace ducts 12A, 14A, respectively. Each heat surge arrestor 16 is arranged at an angle Ω along the longitudinal axis X -- X, Z -- Z of furnace ducts 12A, 14A, respectively. The angle Ω depends upon the solidity σ of the heat surge arrestor 16. Heat surge arrestors 16A of like solidity σ are arranged spaced and parallel one to another at the same angle Ω. Heat arrestors 16B of a differing solidity σ are arranged spaced and parallel one to another at a differing angle Ω. For example, in arranging a heat surge arrestor 16 within a furnace duct 12A, 14A, planar side 24B of the elements E are arranged parallel with regard to the longitudinal axis X -- X, Z -- Z of the furnace duct 12A, 14A. When the planar side 24 B of elements E are arranged parallel with regard to the longitudinal axis X -- X, ZZ of the furnace duct 12A, 14A, the extended plane EP of the heat surge arrestor 16 is at an angle Ω. As such, the extended plane EP is at an angle Ω with respect to a plane S perpendicular to the longitudinal axis
X -- X, Z -- Z of furnace duct 12A, 14A. As illustrated in Figs. 6 and 7, heat surge arrestors 16A of a relatively greater solidity σ and a relatively smaller angle Ω are arranged in a relatively closer proximity to the furnace 12, and heat surge arrestors 16B of a relatively lesser solidity σ and a relatively greater angle Ω are arranged in a relatively more distanced proximity from the furnace 12. Angle Ω ranges from about 5 degrees to about 35 degrees or about 20 degrees depending on heat surge arrestor 16 solidity a. As such, the subject heat surge arrestors 16A, 16B are arranged at least partially across at least a portion of furnace ducts 12A, 14A downstream with regard to flue gas FG flow of the furnace 12. Each of the subject heat surge arrestors 16A, 16B preferably extends fully across the entire furnace duct 12A, 14A interior 13, 15, respectively, and is supported by attachment to walls 17, 19, respectively, defining the furnace ducts 12A, 14A. However, one or more of the heat surge arrestors 16A, 16B may be arranged extending only partially across the furnace duct 12A, 14A interior 13, 15 and supported only by walls 17, 19 defining the furnace ducts 12A, 14A to which the one or more heat surge arrestors 16A, 16B are attached. With the heat surge arrestors 16A, 16B so arranged within furnace ducts 12A, 14A, angled strands 28 of heat surge arrestors 16 are not aligned with or parallel to the longitudinal axis X -- X, Z -- Z of furnace ducts 12A, 14A. As the angled strands 28 are not aligned with or parallel to the longitudinal axis X -- X, Z -- Z of furnace ducts 12A, 14A, the angled strands 28 of heat surge arrestors 16 impact flowing flue gas FG to a relatively high degree thereby increasing heat absorption from the flowing flue gas FG. If surge heat arrestors 16 were to be arranged within primary furnace ducts 12A, 14A so that strands 28 are aligned with or parallel to the longitudinal axis X -- X, Z -- Z of furnace ducts 12A, 14A, the angled strands 28 would then impact flowing flue gas FG to a relatively low degree thereby decreasing heat absorption from the flowing flue gas FG. In other words, the angled strands 28 serve to increase heat surge arrestor 16 surface area impact with flue gas FG flow for increased heat absorption from the flue gas FG. The angle α between extended plane EP of heat surge arrestor 16 and a respective angled strand 28 is illustrated in Fig. 3. The angle α between extended plane EP of heat surge arrestor 16 and a respective angled strand 28 is an angle of about 20 degrees to about 40 degrees, or about 30 degrees with respect thereto.

In operation, metal production plant 10 is operable to produce a metal product. As such, heat H from a heat source 36 is supplied to furnace 12 via fluidly connected duct 36A. Likewise, oxygen O from an oxygen-containing gas, O₂ gas, and/or air may be supplied from an oxygen O source 38 to furnace 12 via fluidly connected duct 38A. Using heat H and oxygen O, iron and steel scrap SS is smelted within furnace 12. As described above, to protect furnace 12 from the relatively high temperatures used to smelt the iron and steel scrap SS, cooled coil components 40 for circulation of a cooling fluid CF supplied via duct 42A from a cooling fluid supply 42 are arranged on interior surfaces 12B of furnace 12. Heated cooling fluid CF is returned from the cooled coil components 40 to cooling fluid supply 42 via duct 42B for cooling prior to recirculation. During the smelting process, heat surges occur. Heat surges are defined herein as relatively high temperature increases from about 86 °F (30 °C) to about 2000 °F (1093 °C) or greater in a relatively short period of time and for a relatively short duration totaling about a minute or less, or about 30 seconds. Heat surges most commonly occur during furnace 12 charging and tapping. Flue gas FG flows from furnace 12 via a furnace hood 14 and a furnace hood duct 14A to a particulate collection system 18. Flue gas FG also flows from furnace 12 via primary furnace duct 12A to the particulate collection system 18. Through arrangement of a plurality of heat surge arrestors 16 ranging in number from 2 to about 50, or about 30, in one or more furnace ducts 12A, 14A heat energy from heat surges in temperature from about 86 °F (30 °C) to about 2000 °F (1093 °C) or greater in a relatively short period of time and for a relatively short duration totaling about a minute or less, or about 30 seconds is absorbed by the plurality of heat surge arrestors 16 thereby protecting downstream apparatus 22 from such damaging heat temperatures. The plurality of heat surge arrestors 16 capture or absorb heat energy from heat surges, so that flue gas FG temperature at inlet 18B of particulate collection system 18 during a period of a heat surge is comparable to a flue gas FG temperature at inlet 18B of particulate collection system 18 during a period of no heat surge and without use of a heat surge arrestor 16, e.g., about 130 °C to about 160 °C. From one or more furnace ducts 12A, 14A, flue gas FG flows to particulate collection system 18 for separation of particulate matter PM from the flue gas FG. Following particulate matter PM separation, flue gas FG flows via duct 18A to a flue gas treatment system 20. Flue gas treatment system 20 may be a selective catalytic reactor, a non-selective catalytic reactor, a desulfurization reactor and/or a similar such reactor for a reduction of or removal of carbon dioxide, carbon monoxide, hydrogen fluoride, hydrogen chloride, and/or other pollutant gas from the flue gas FG prior to release to the atmosphere via duct 20a and stack 20B.

A method useful in metal production to capture heat energy from heat surges or peaks generated by a smelting furnace 12 comprises producing a plurality of heat surge arrestors 16 with each heat surge arrestor 16 of the plurality of heat surge arrestors 16 produced from a cut and stretched planar sheet material 24, and arranging the produced plurality of heat surge arrestors 16 in one or more smelting furnace ducts 12A, 14A at an angle Ω with respect to a plane S perpendicular to the longitudinal axis X -- X, Z -- Z of furnace ducts 12A, 14A for flue gas FG heat surge heat energy absorption by the plurality of heat surge arrestors 16. Angle Ω depends on the solidity σ of the heat surge arrestor 16. The flue gas FG heat surges according to this method are of relatively high temperature increases from about 86 °F (30 °C) to about 2000 °F (1093 °C) or greater in a relatively short period of time and for a relatively short duration totaling about a minute or less, or about 30 seconds. According to the method, the plurality of heat surge arrestors 16 comprises at least two to about 50, or about 30 heat surge arrestors 16 of stretched material construction 24A. Also according to the subject method, each heat surge arrestor 16 of stretched material construction 24A comprises strands 28A, 28B defining apertures 26 through the heat surge arrestor 16 with strand 28A extending outwardly above the extended plane EP of heat surge arrestor 16, such as at an angle α of about 20 degrees to about 40 degrees, or about 30 degrees with respect thereto, and strand 28B extends outwardly below the extended plane EP of heat surge arrestor 16, such as at an angle α of about 20 degrees to about 40 degrees, or about 30 degrees with respect thereto. Further, the subject heat surge arrestors 16 may each have the same or differing solidity σ of about 0.2 percent to about 0.7 percent, or about 0.3 percent with perpendicular light.

In summary, the subject metal production plant 10 comprises a metal smelting furnace 12 comprising a furnace hood duct 14A and a primary furnace duct 12A, i.e., furnace ducts 12A, 14A, and a plurality of stretched metal heat surge arrestors 16 arranged in one or more of the furnace ducts 12A, 14A operable to absorb heat energy from a flue gas FG heat surge from the metal smelting furnace 12. The plurality of stretched metal heat surge arrestors 16 comprise about 2 to about 50, or about 30 individual heat surge arrestors 16, which may have the same or differing solidity a. Each heat surge arrestor 16 of the plurality of stretched metal heat surge arrestors 16 is arranged within the one or more furnace ducts 12A, 14A at an angle Ω with regard to a plane S perpendicular to the longitudinal axis X -- X, Z -- Z of the furnace ducts 12A, 14A, respectively. Hence, when the planar side 24 B of elements E are arranged parallel with regard to the longitudinal axis X -- X, Z -- Z of the furnace duct 12A, 14A, the extended plane EP of the heat surge arrestor 16 is at an angle Ω. As such, the extended plane EP is at an angle Ω with respect to a plane S perpendicular to the longitudinal axis X -- X, Z -- Z of furnace duct 12A, 14A. Angle Ω ranges from about 5 degrees to about 35 degrees or about 20 degrees depending on heat surge arrestor 16 solidity a. Further, one or more heat surge arrestors 16 of the plurality of heat surge arrestors 16 arranged in the one or more furnace ducts 12A, 14A may be sized to extend only partially across an interior 13, 15, of the furnace ducts 12A, 14A, respectively. The plurality of heat surge arrestors 16 arranged within the one or more furnace ducts 12A, 14A are supported by walls 17, 19, defining the furnace ducts 12A, 14A, respectively, to which the plurality of heat surge arrestors 16 attach. Strands 28 of the one or more heat surge arrestors 16 of the plurality of heat surge arrestors 16 are angled α about 20 degrees to about 40 degrees, or about 30 degrees with respect to an extended plane EP of the one or more heat surge arrestors 16.

In summary, the method of absorbing heat energy from flue gas FG heat surges from a metal smelting furnace 12 of a metal production plant 10 comprises arranging a plurality of stretch metal heat surge arrestors 16 in one or more furnace ducts 12A, 14A of the furnace 12 for absorption by the plurality of stretch metal heat surge arrestors 16 of heat energy from furnace 12 flue gas FG heat surges. According to the subject method, the plurality of stretched metal heat surge arrestors 16 comprise about 2 to about 50, or about 30, individual heat surge arrestors 16 having the same or differing solidity a. Also according to the subject method, each heat surge arrestor 16 of the plurality of stretched metal heat surge arrestors 16 is arranged within a furnace duct 12A, 14A at an angle Ω with regard to a plane S perpendicular to the longitudinal axis X -- X, Z -- Z of the furnace duct 12A, 14A, respectively. Hence, when the planar side 24 B of elements E are arranged parallel with regard to the longitudinal axis X -- X, Z -- Z of the furnace duct 12A, 14A, the extended plane EP of the heat surge arrestor 16 is at an angle Ω. As such, the extended plane EP is at an angle Ω with respect to a plane S perpendicular to the longitudinal axis X -- X, Z -- Z of furnace duct 12A, 14A. Angle Ω ranges from about 5 degrees to about 35 degrees or about 20 degrees depending on heat surge arrestor 16 solidity a. In accordance with this method, one or more heat surge arrestors 16 of the plurality of heat surge arrestors 16 arranged in one or more furnace ducts 12A, 14A may be sized to extend only partially across an interior 13, 15, of the primary furnace duct and/or furnace hood duct 14A. Further according to the method, the plurality of heat surge arrestors 16 arranged in one or more furnace ducts 12A, 14A is supported by walls 17, 19, defining the furnace ducts 12A, 14A, respectively, to which the plurality of heat surge arrestors 16 is attached.

## Claims

1. A metal production plant (10) comprising
a metal smelting furnace (12) comprising one or more furnace ducts (12A, 14A), and
a plurality of planar heat surge arrestors arranged in at least one of the one or more furnace ducts (12A, 14A) operable to absorb heat energy from a flue gas (FG) heat surge from the metal smelting furnace (12),
**CHARACTERIZED IN THAT**
the heat surge arrestors (16) are made of stretched metal.

2. The plant (10) of claim 1, wherein the plurality of stretched metal heat surge arrestors (16) comprise about 2 to about 50 individual heat surge arrestors (16).

3. The plant (10) of claim 1 or 2, wherein the plurality of stretched metal heat surge arrestors (16) have a differing solidity (σ).

4. The plant (10) of any one of claims 1 to 3, wherein each heat surge arrestor (16) of the plurality of stretched metal heat surge arrestors (16) is arranged within the at least one furnace duct (12A, 14A) at an angle (Ω) with respect to a plane (S) perpendicular to the longitudinal axis (X-X, Z-Z) of the at least one furnace duct (12A, 14A).

5. The plant (10) of any one of claims 1 to 4, further comprising a plurality of stretched metal heat surge arrestors (16) arranged parallel one to another within the at least one furnace duct (12A, 14A) operable to absorb heat energy from a flue gas (FG) heat surge from the metal smelting furnace (12).

6. The plant (10) of any one of claims 1 to 5, wherein one or more heat surge arrestors (16) of the plurality of heat surge arrestors (16) may be sized to extend only partially across an interior (13, 15) of the at least one furnace duct (12A, 14A).

7. The plant (10) of any one of claims 1 to 6, wherein the plurality of heat surge arrestors (16) are supported by walls (17, 19) defining the at least one furnace duct (12A, 14A) to which the plurality of heat surge arrestors (16) is attached.

8. The plant (10) of any one of claims 1 to 7, wherein strands (28) of one or more heat surge arrestors (16) of the plurality of heat surge arrestors (16) are angled (α) about 20 degrees to about 40 degrees with respect to an extended plane (EP) of the one or more heat surge arrestors (16).

9. A method of absorbing heat surges in a metal production plant (10) **CHARACTERIZED by**
arranging a plurality of stretched metal heat surge arrestors (16) in at least one metal smelting furnace duct (12A, 14A) for absorption by the plurality of stretched metal heat surge arrestors (16) of heat energy from furnace (12) flue gas (FG) heat surges.

10. The method of claim 9, wherein the plurality of stretched metal heat surge arrestors (16) comprise about 2 to about 50 individual heat surge arrestors (16).

11. The method of claim 9 or 10, wherein individual heat surge arrestors (16) of the plurality of stretched metal heat surge arrestors (16) have a differing solidity (σ).

12. The method of any one of claims 9 to 11, wherein each heat surge arrestor (16) of the plurality of stretched metal heat surge arrestors (16) is arranged parallel to one another within the at least one furnace duct (12A, 14A) at an angle (Ω) with regard to a plane (S) perpendicular to the longitudinal axis (X-X, Z-Z) of the at least one furnace duct (12A, 14A).

13. The method of any one of claims 9 to 12, further comprising arranging a plurality of stretched metal heat surge arrestors (16) of differing solidity (σ) at differing angles (Ω) within the at least one furnace duct (12A, 14A) operable to absorb heat energy from a flue gas (FG) heat surge from a furnace hood (14) of the metal smelting furnace (12).

14. The method of any one of claims 9 to 13, wherein one or more heat surge arrestors (16) of the plurality of heat surge arrestors (16) may be sized to extend only partially across an interior (13, 15) of the at least one furnace duct (12A, 14A).

15. The method of any one of claims 9 to 14, wherein the plurality of heat surge arrestors (16) is supported by walls (17, 19) defining the at least one furnace duct (12A, 14A) to which the plurality of heat surge arrestors (16) is attached.

## Patentansprüche

1. Metallproduktionsanlage (10) aufweisend
einen Metallschmelzofen (12), der einen oder mehrere Ofenkanäle (12A, 14A) aufweist, und
mehrere ebene Wärmestoßableiter, die in wenigstens einem von dem einen oder den mehreren Ofenkanälen (12A, 14A) angeordnet und funktionsfähig sind, um Wärmeenergie aus einem Wärmestoß eines Rauchgases (FG) aus dem Metallschmelzofen (12) zu absorbieren,
**dadurch gekennzeichnet, dass**
die Wärmestoßableiter (16) aus Streckmetall hergestellt sind.

2. Anlage (10) nach Anspruch 1, wobei die mehreren Streckmetall-Wärmestoßableiter (16) etwa 2 bis etwa 50 einzelne Wärmestoßableiter (16) aufweisen.

3. Anlage (10) nach Anspruch 1 oder 2, wobei die mehreren Streckmetall-Wärmestoßableiter (16) unterschiedliche Festigkeit (σ) haben.

4. Anlage (10) nach einem beliebigen der Ansprüche 1 bis 3, wobei jeder Wärmestoßableiter (16) der mehreren Streckmetall-Wärmestoßableiter (16) innerhalb des wenigstens einen Ofenkanals (12A, 14A) unter einem Winkel (Ω) in Bezug auf eine Ebene (S) senkrecht zu der Längsachse (X-X, Z-Z) des wenigstens einen Ofenkanals (12A, 14A) angeordnet ist.

5. Anlage (10) nach einem beliebigen der Ansprüche 1 bis 4, die ferner mehrere Streckmetall-Wärmestoßableiter (16) aufweist, die innerhalb des wenigstens einen Ofenkanals (12A, 14A) parallel zueinander angeordnet und funktionsfähig sind, um Wärmeenergie aus einem Wärmestoß eines Rauchgases (FG) aus dem Metallschmelzofen (12) zu absorbieren.

6. Anlage (10) nach einem beliebigen der Ansprüche 1 bis 5, wobei ein oder mehrere Wärmestoßableiter (16) der mehreren Wärmestoßableiter (16) bemessen sein kann/können, um sich nur teilweise über einen Innenraum (13, 15) des wenigstens einen Ofenkanals (12A, 14A) zu erstrecken.

7. Anlage (10) nach einem beliebigen der Ansprüche 1 bis 6, wobei die mehreren Wärmestoßableiter (16) durch den wenigstens einen Ofenkanal (12A, 14A) definierende Wände (17, 19) gehalten sind, an denen die mehreren Wärmestoßableiter (16) angebracht sind.

8. Anlage (10) nach einem beliebigen der Ansprüche 1 bis 7, wobei Stränge (28) von einem oder mehreren Wärmestoßableitern (16) der mehreren Wärmestoßableiter (16) unter einem Winkkel (α) von etwa 20 Grad bis etwa 40 Grad in Bezug auf eine ausgedehnte Ebene (EP) des einen oder der mehreren Wärmestoßableiter (16) geneigt sind.

9. Verfahren zum Absorbieren von Wärmestößen in einer Metallproduktionsanlage (10), **gekennzeichnet durch**
Anordnen mehrerer Streckmetall-Wärmestoßableiter (16) in wenigstens einem Metallschmelzofenkanal (12A, 14A) zur Absorption von Wärmeenergie aus Wärmestößen eines Rauchgases (FG) eines Ofens (12) durch die mehreren Streckmetall-Wärmestoßableiter (16).

10. Verfahren nach Anspruch 9, wobei die mehreren Streckmetall-Wärmestoßableiter (16) etwa 2 bis etwa 50 einzelne Wärmestoßableiter (16) aufweisen.

11. Verfahren nach Anspruch 9 oder 10, wobei einzelne Wärmestoßableiter (16) der mehreren Streckmetall-Wärmestoßableiter (16) eine andere Festigkeit (σ) aufweisen.

12. Verfahren nach einem beliebigen der Ansprüche 9 bis 11, wobei jeder Wärmestoßableiter (16) der mehreren Streckmetall-Wärmestoßableiter (16) parallel zueinander innerhalb des wenigstens einen Ofenkanals (12A, 14A) unter einem Winkel (Ω) in Bezug auf eine Ebene (S) senkrecht zu der Längsachse (X-X, Z-Z) des wenigstens einen Ofenkanals (12A, 14A) angeordnet ist.

13. Verfahren nach einem beliebigen der Ansprüche 9 bis 12, das ferner ein Anordnen mehrerer Streckmetall-Wärmestoßableiter (16) unterschiedlicher Festigkeit (σ) unter verschiedenen Winkeln (Ω) innerhalb des wenigstens einen Ofenkanals (12A, 14A) aufweist, die funktionsfähig sind, um Wärmeenergie aus einem Wärmestoß eines Rauchgases (FG) aus einer Ofenhaube (14) des Metallschmelzofens (12) zu absorbieren.

14. Verfahren nach einem beliebigen der Ansprüche 9 bis 13, wobei ein oder mehrere Wärmestoßableiter (16) der mehreren Wärmestoßableiter (16) bemessen sein können, um sich nur teilweise über einen Innenraum (13, 15) des wenigstens einen Ofenkanals (12A, 14A) zu erstrecken.

15. Verfahren nach einem beliebigen der Ansprüche 9 bis 14, wobei die mehreren Wärmestoßableiter (16) durch den wenigstens einen Ofenkanal (12A, 14A) definierende Wände (17, 19) gehalten sind, an denen die mehreren Wärmestoßableiter (16) angebracht sind.

## Revendications

1. Usine de production de métal (10) comprenant :
un four de fusion de métal (12) comprenant un ou plusieurs canaux de four (12A, 14A), et
une pluralité de limiteurs de sautes de chaleur plats placés dans au moins l'un desdits canaux de four (12A, 14A), aptes à absorber l'énergie calorifique d'une saute de chaleur de gaz de carneau (FG) provenant du four de fusion de métal (12),
**caractérisée en ce que** les limiteurs de sautes de chaleur (16) sont faits de métal déployé.

2. Usine (10) selon la revendication 1, dans laquelle la pluralité de limiteurs de sautes de chaleur en métal déployé (16) comprend environ de 2 à 50 limiteurs de sautes de chaleur individuels (16).

3. Usine (10) selon la revendication 1 ou 2, dans laquelle les limiteurs de sautes de chaleur en métal déployé (16) n'ont pas tous la même solidité (σ).

4. Usine (10) selon l'une quelconque des revendications 1 à 3, dans laquelle chaque limiteur de sautes de chaleur (16) de la pluralité de limiteurs de sautes de chaleur en métal déployé (16) est placé dans ledit au moins un canal de four (12A, 14A) en formant un angle (Ω) par rapport à un plan (S) perpendiculaire à l'axe longitudinal (X-X, Z-Z) dudit au moins un canal de four (12A, 14A).

5. Usine (10) selon l'une quelconque des revendications 1 à 4, comprenant en outre une pluralité de limiteurs de sautes de chaleur en métal déployé (16) placés parallèlement les uns aux autres dans ledit au moins un canal de four (12A, 14A) aptes à absorber l'énergie calorifique d'une saute de chaleur de gaz de carneau (FG) provenant du four de fusion de métal (12).

6. Usine (10) selon l'une quelconque des revendications 1 à 5, dans laquelle un ou plusieurs limiteurs de sautes de chaleur (16) de la pluralité de limiteurs de sautes de chaleur (16) peuvent être dimensionnés pour ne s'étendre que partiellement sur la largeur de l'intérieur (13, 15) dudit au moins un canal de four (12A, 14A).

7. Usine (10) selon l'une quelconque des revendications 1 à 6, dans laquelle les limiteurs de sautes de chaleur (16) sont supportés par des parois (17, 19) qui définissent ledit au moins un canal de four (12A, 14A) auquel sont fixés les limiteurs de sautes de chaleur (16).

8. Usine (10) selon l'une quelconque des revendications 1 à 7, dans laquelle les brins (28) d'un ou de plusieurs limiteurs de sautes de chaleur (16) de la pluralité de limiteurs de sautes de chaleur (16) forment un angle (α) d'environ 20 degrés à environ 40 degrés par rapport à un plan étendu (EP) desdits un ou plusieurs limiteurs de sautes de chaleur (16).

9. Procédé d'absorption de sautes de chaleur dans une usine de production de métal (10), **caractérisé par** la mise en place d'une pluralité de limiteurs de sautes de chaleur en métal déployé (16) dans au moins un canal de four de fusion de métal (12A, 14A) pour que la pluralité de limiteurs de sautes de chaleur en métal déployé (16) absorbe l'énergie calorifique des sautes de chaleur de gaz de carneau (FG) d'un four (12).

10. Procédé selon la revendication 9, dans lequel la pluralité de limiteurs de sautes de chaleur en métal déployé (16) comprend environ de 2 à 50 limiteurs de sautes de chaleur individuels (16).

11. Procédé selon la revendication 9 ou 10, dans lequel les limiteurs de sautes de chaleur individuels (16) de la pluralité de limiteurs de sautes de chaleur en métal déployé (16) n'ont pas tous la même solidité (σ).

12. Procédé selon l'une quelconque des revendications 9 à 11, dans lequel chaque limiteur de sautes de chaleur (16) de la pluralité de limiteurs de sautes de chaleur en métal déployé (16) est placé parallèlement aux autres dans ledit au moins un canal de four (12A, 14A) en formant un angle (Ω) par rapport à un plan (S) perpendiculaire à l'axe longitudinal (X-X, Z-Z) dudit au moins un canal de four (12A, 14A).

13. Procédé selon l'une quelconque des revendications 9 à 12, comprenant en outre la mise en place d'une pluralité de limiteurs de sautes de chaleur en métal déployé (16) de solidité différente (σ) à des angles différents (Ω) dans ledit au moins un canal de four (12A, 14A) aptes à absorber l'énergie calorifique d'une saute de chaleur de gaz de carneau (FG) provenant d'une hotte de four (14) du four de fusion de métal (12).

14. Procédé selon l'une quelconque des revendications 9 à 13, dans lequel un ou plusieurs limiteurs de sautes de chaleur (16) de la pluralité de limiteurs de sautes de chaleur (16) peuvent être dimensionnés pour ne s'étendre que partiellement sur la largeur de l'intérieur (13, 15) dudit au moins un canal de four (12A, 14A).

15. Procédé selon l'une quelconque des revendications 9 à 14, dans lequel les limiteurs de sautes de chaleur (16) sont supportés par des parois (17, 19) qui définissent ledit au moins un canal de four (12A, 14A) auquel sont fixés les limiteurs de sautes de chaleur (16).
